# EUROPEAN PATENT APPLICATION

(11) **EP 1 892 955 A2**
(43) Date of publication of application: **27.02.2008**
(21) Application number: 07110369.1
(22) Date of filing: 15.06.2007
(51) Int. Cl.: H04N 5/445

(54) **System and Method for Efficiently Providing ESG Data in DVB-H System**

(30) Priority: 21.08.2006 KR 20060079060
(71) Applicant: Samsung Electronics Co., Ltd., Suwon-si Gyeonggi-do (KR)
(72) Inventor: Sung, Ki-Yeon, Yeongtong-gu, Suwon-si Gyeonggi-do (KR); Jeon, Jin-Woo, Yeongtong-gu, Suwon-si Gyeonggi-do (KR); Han, Young-Seop, Yeongtong-gu, Suwon-si Gyeonggi-do (KR); Kim, Young-Jip, Yeongtong-gu, Suwon-si Gyeonggi-do (KR)
(74) Representative: Zimmer, Franz-Josef

(57) **Abstract**

Disclosed is a system and method for efficiently providing Electric Service Guide (ESG) data in a Digital Video Broadcasting-Handheld (DVB-H) system. There is presented a method for dividing ESG data into basic data and additional data and for separately providing the data, wherein the basic data is necessary to provide a DVB-H broadcasting service. To separately provide the basic data from the additional data, a service provider forwards, during a basic profile session, only the basic data necessary to provide a broadcasting service, and separately forwards additional data during an advanced profile session including additional and high-grade data. Then, a terminal determines if a profiling is set up. If the profiling is set up, the terminal gets access to the basic profile session to acquire the basic data, and deals with the advanced profile session as a background job. As a result, the terminal first gets the basic ESG data necessary to provide the broadcasting service, which can antedate the commencement of the broadcasting service, and which can improve the effectiveness of a data receiving scheme of the terminal in great measure.

## Description

The present invention relates to a Digital Video Broadcasting-Handheld (DVB-H) system, and more particularly to a system and a method for efficiently providing Electronic Service Guide (ESG) data in a DVB-H system.

Digital Video Broadcasting (DVB-) refers to the technical standards, which have been established for the purpose of improving the receptibility of Digital TeleVision (DTV) during motion, and the letter 'H' represents 'Handheld.' The standards support mobile multimedia broadcasting, which provides high quality audio and image services anytime and anywhere, even during driving or walking.

A service model using this DVB-H has the following configuration. Above all, a sending end is configured with a network through which common carriers and broadcasters interact with one another in compliance with Digital Video Broadcasting-Universal Mobile Telecommunications System (DVB-UMTS). The broadcasters deliver compressed data to a DVB-H compliant terminal on the basis of Digital Video Broadcasting-Advanced Video Coding (DVB-AVC). Subsequently, the terminal communicates with the common carriers according to communication standards such as Digital Video Broadcasting-Universal Mobile Telecommunications System/Global System for Mobile communication (DVB-UMTS/GSM), and is now able to deliver receiving-side information to the broadcasters in real time via a communication network.

In DVB-H, most broadcasting information is included in an Electric Service Guide (ESG), with which a user can choose an interesting TV or radio channel or an item to download. In addition, ESG provides information allowing the terminal to be able to be connected with a specified Internet Protocol (IP) stream included in the DVB-H transport stream. The whole process of managing the ESG is specifically divided into three sub-processes as follows: a first sub-process of bootstrapping the ESG, a second sub-process of acquiring the ESG, and a third sub-process of updating the ESG.

The first sub-process causes a terminal to perceive what kinds of ESGs the terminal can receive and how these ESGs are obtained. The second sub-process causes the terminal to gather the ESG information and to manage the gathered ESG information. The third sub-process causes the terminal to restore the ESG information having the latest version.

The above terminal should always receive the ESG enabling it to provide Audio/Video (AV) service. Since required basic data to receive the actual AV service during the transmission of the ESG data is essentially transmitted along with relatively large amount of additional DVB-H compliant data , the effectiveness of the terminal to receive data declines, and it takes a lot of time for the terminal to process the data. Because of this, the necessity of a method for transmitting ESG data, which improves quality of service has been realized.

As described above, as the data essentially required to provide the DVB-H broadcasting services is transmitted simultaneously with the additional data, the user has to wait in an idle mode. It is quite inconvenient that the user cannot but wait in the idle mode until the services of DVB-H broadcasting start.

Accordingly, the present invention solves the above problems occurring in the prior art, and it is the object of the present invention to provide a system and a method for efficiently providing ESG data in a DVB-H system.

This object is solved by the subject matter of the independent claims.

Preferred embodiments are defined in the dependent claims.

Furthermore, it is an aspect of the present invention to provide a system and a method for efficiently providing ESG data in a DVB-H system, which improves the quality of DVB-H broadcasting services.

In order to accomplish the above, there is provided a method for efficiently providing Electric Service Guide (ESG) data in a Digital Video Broadcasting-Handheld (DVB-H) system according to an embodiment of the present invention, including transmitting the ESG data to a terminal by a DVB-H service provider; determining if there exists in ESG data a setting of a profiling for separating minimum ESG data and to process separated minimum ESG data, wherein the determining is performed by the terminal; detecting if a profile type set in the ESG data denotes a basic profile session including basic data necessary to provide a DVB-H broadcasting service when the profiling is set; and processing the retrieved basic profile session.

In order to accomplish the above, there is provided a system for efficiently providing Electric Service Guide (ESG) data in a Digital Video Broadcasting-Handheld (DVB-H) system according to the present invention, including a DVB-H service provider transmitting the ESG data to a terminal; and a terminal for determining if the ESG data contains a setting of a profiling through which the terminal separates minimum ESG data to process the separated minimum ESG data, for detecting if a profile type set in the ESG data denotes a basic profile session including basic data necessary to provide a DVB-H broadcasting service when the profiling is set, and for processing the retrieved basic profile session first of all after retrieving the basic profile session on the basis of a result of the detection.

The present invention will be more apparent from the following detailed description taken in conjunction with the accompanying drawings, in which:
FIG. 1 is an overview of a transmission mode of an ESG single stream according to a preferred embodiment of the present invention;
FIG. 2 is an overview of a transmission mode of ESG multiple streams according to a preferred embodiment of the present invention;
FIG. 3 is an overview of a profiling of the ESG data according to a preferred embodiment of the present invention;
FIG. 4 is a listing of newly defined syntax in a partition declaration according to a preferred embodiment of the present invention;
FIG. 5 is a flowchart of a control procedure performed during reception of the ESG data by a terminal; and
FIG. 6 shows the reduction effect of a transmission capacity according to a preferred embodiment of the present invention.

Preferred embodiments of the present invention will be described with reference to the accompanying drawings. The same elements will be designated by the same reference numerals all through the following description and drawings although they are shown in different drawings. Further, in the following description of the present invention, detailed description of known functions and configurations incorporated herein will be omitted when it may make the subject matter of the present invention rather unclear.

According to the present invention, there is presented a method for dividing ESG data into basic data and additional data and for separately providing the data, wherein the basic data is necessary to provide a DVB-H broadcasting service. To separately provide the basic data from the additional data, a service provider forwards the basic data necessary to provide a broadcasting service during a basic profile session, and separately forwards additional data including high-grade data during an advanced profile session. Then, a terminal determines if a profiling is set up. If the profiling is set up, the terminal gets access to the basic profile session to acquire the basic data, and deals with the advanced profile session as a background job. As a result, the terminal first gets the basic ESG data necessary to provide the broadcasting service, which can antedate the commencement of the broadcasting service, and which can improve the effectiveness of a data receiving scheme of the terminal in great measure.

To efficiently describe the present invention, a transmission scheme of the ESG in the DVB-H is first described, and then formats of notice messages according to preferred embodiments of the present invention and system operation corresponding to the formats, will be described.

First, a terminal acquires information essentially required to receive a service provided by a service provider by receiving an ESG stream. When a user has selected a specified service, by using the acquired information, the terminal gets access to a data stream the service offers, and then receives data. The information required for the terminal to get access to the data stream is transmitted in the form of ESG fragments.

The ESG data is classified by fragments. The fragments of the ESG data are tied into units of several fragments, and each of the tied fragments of the ESG data is included in a container. During a flute session, each container is transmitted as it is regarded as a single object.

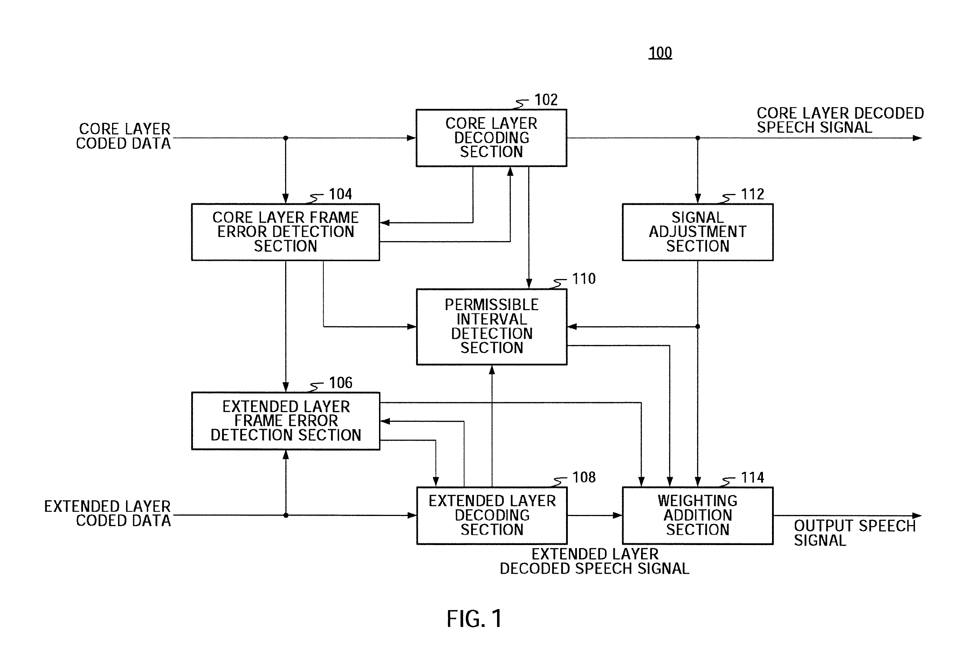

A first description is presented in a mode of ESG single stream transport. ESG containers are transmitted during a same flute session as illustrated in FIG. 1. This session can be retrieved through an ESG access descriptor forwarded from an ESG bootstrap session.

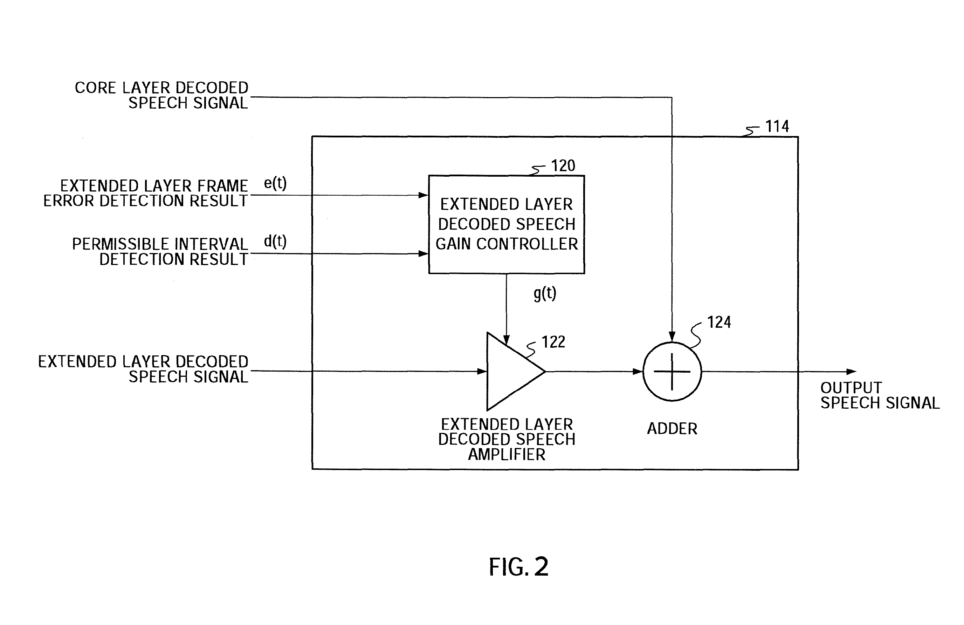

On the other hand, in a mode of ESG multiple stream transport, ESG containers are transmitted during sessions, which are more than three, as illustrated in FIG. 2. During an ESG bootstrap session, an ESG announcement carousel flute session is designated, and during the ESG announcement carousel flute session when the actual ESG containers are transmitted, the number of sessions, and information on the sessions are perceived.

Referring to FIG. 2, the service provider informs the terminal of information on a channel (hereinafter "channel information") of the ESG bootstrap session, i.e., a path, so as to transmit the ESG. Next, if the terminal is connected with the channel according to the channel information, the terminal receives bootstrap information, which includes an ESG provider descriptor and an ESG access descriptor. Through the ESG provider descriptor, information on an ID, a name, a logo, etc. related to the ESG provider are forwarded, and through the ESG access descriptor, information on an announcement carousel of the ESG, and information on the number of each IP session and on the address, during which the ESG is transferred, are forwarded.

During the announcement carousel of the ESG, an ESG init container and index containers of the ESG are forwarded. The ESG init container includes an option of a decoder for deciphering the ESG, a partition declaration, an index list, and an index structure. The partition declaration includes information on a division reference by each session and on a channel of each session, in a case where the ESG is transferred during multiple sessions. The index list and the index structure include fragments of the ESG to be forwarded, and information on mapping between containers. The ESG flute session illustrated in FIGS. 1 and 2 signifies an ESG data session.

The ESG is included in a container, and is then forwarded with the container. Each container includes a fragment management structure denoting information on fragments configuring the container and the ESG fragments.

This data model of the ESG includes a service fragment, a schedule fragment, a contents fragment, an acquisition fragment, a service bundle fragment, a purchase fragment and a purchase channel fragment. The ESG has information on a broadcasting service, and is forwarded to the terminal by using a separate Internet Protocol (IP) stream at a separate time from an actual data stream. Hence, it is possible that the service provider offers user information by using an ESG model before providing the service, which the user must have perceived before receiving a service. By receiving the ESG model, the terminal acquires information required to receive the service, which the service provider offers. When the user selects a specified service, the terminal gets access to a data stream, transmitted to provide the service, by using the acquired information, and then receives data.

A preferred embodiment of the present invention will be described. The preferred embodiment includes a first and a second process. In the first process, by using the partition declaration, it is reported that the whole ESG data is classified into the basic data and the additional data, and that each classified data is then separately forwarded. In the second process, the terminal checks if a profiling is set up in the partition declaration, divides each received session into a basic profile session and an advanced profile session, and deals with divided sessions.

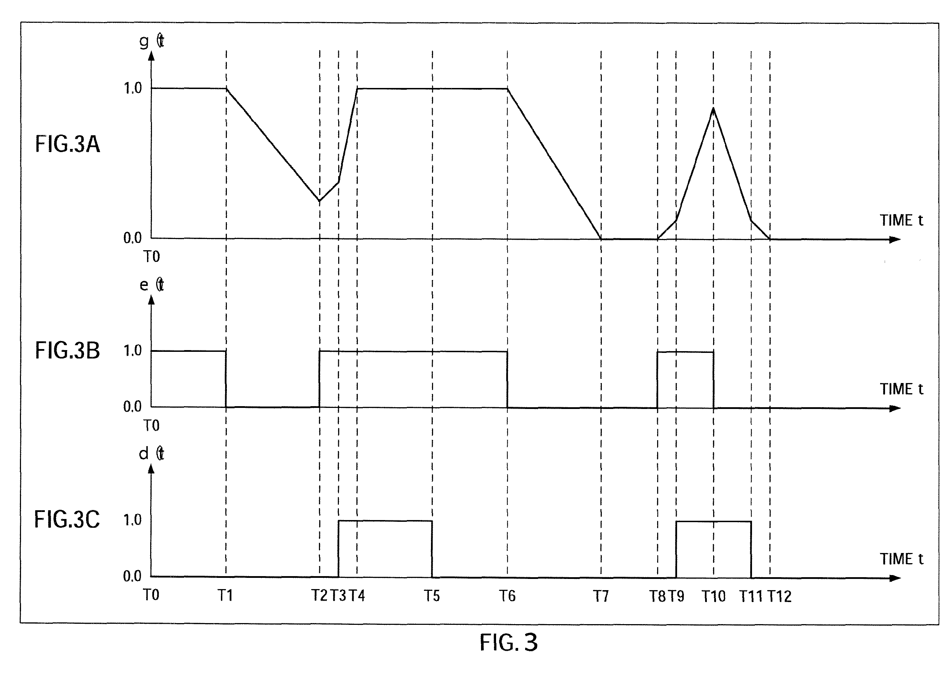

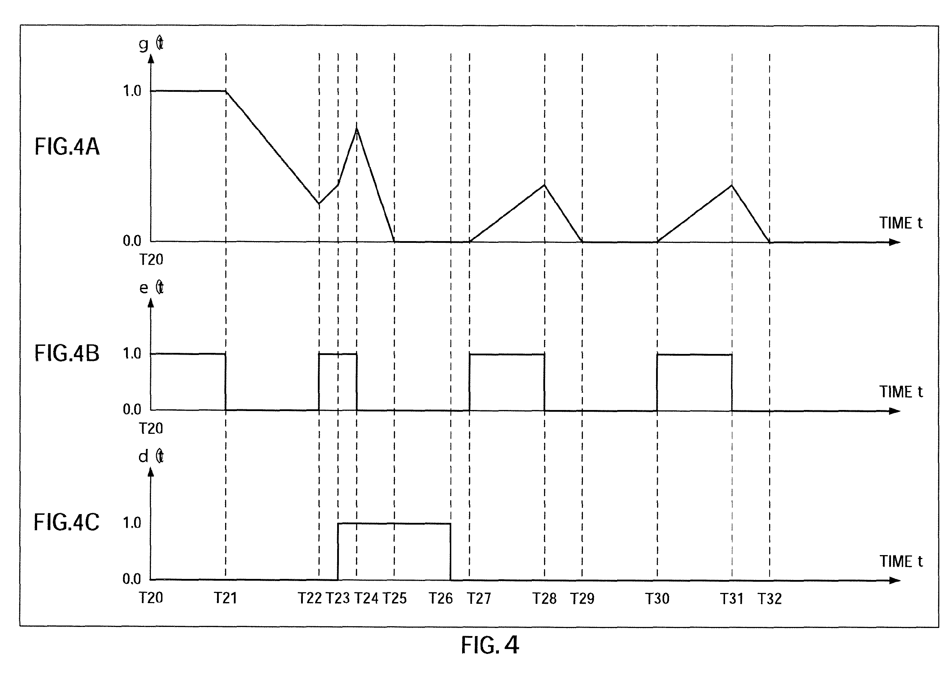

First, a scheme corresponding to the preferred embodiment of the present invention will be described with reference to FIGS. 3 and 4. One session during which the ESG data is forwarded is divided into several sessions and the divided sessions are enabled to provide ESG data. As illustrated in FIG. 3, it is possible that the ESG data is forwarded in a multiple stream mode. In the multiple stream mode, information of each session is inserted in an init container inside an ESG announcement carousel, and then the inserted information is transmitted with the init container. In particular, the partition declaration includes information on a division reference by each session and on a channel of each session, in a case where the ESG is transferred during multiple sessions. The index list and the index structure include fragments of the ESG to be forwarded, and information on mapping between containers. Accordingly, if the terminal confirms the partition declaration, it is now able to perceive the number of sessions to be transmitted, an IP address of each session, and information on ports.

The ESG data is classified into the basic profile session and the advanced profile session as illustrated in FIG. 3, and the classified ESG data is separately forwarded.

In order to divide the session as described above, the structure of the partition declaration of standards of Digital Video Broadcasting-Handheld Computer Based Message System (DVB-H CBMS) has to be improved. In a method for efficiently classifying the ESG data, and for transmitting the classified data, in order for the terminal to perform the profiling of the ESG data, in the preferred embodiment of the present invention, new fields named "profiling" and "profiletype" are defined. The profiling field denotes if the profiling is set up in the partition declaration, and the type of the profile session can be distinguished from the profiletype field. The profiling field can use one of reserved bits, a new field of one byte is appended, and can be used as a profiling field. Furthermore, the profiletype field can use one newly appended byte.

As described above, in the preferred embodiment of the present invention, to report if the profiling is set up in the partition declaration, the field designated by reference numeral 400 in FIG. 4 is appended. In the profiling field, a value is set in order to detect the profiling of an ESG data session the service provider offers. For example, if the profiling field is set to '0', then the terminal determines that a profiling technique is not applied to the ESG data session, and therefore does not perform profiling. On the contrary, if the profiling field is set to '1,' then the terminal determines that the profiling technique is applied to the ESG data session, so that it performs the profiling. In this manner, if the terminal checks out only the value set in the profiling field, it can determine if the profiling is performed with the ESG data. Namely, the terminal can determine either that it deals with the ESG data session in the manner corresponding to a conventional multiple stream mode or that it divides the ESG data session into the pertinent profile sessions to deal with the ESG data session.

In the preferred embodiment of the present invention, so that the terminal can perceive the type of each profile session when the profiling is set, a profiletype field designated by reference numeral 410 in FIG. 4 is appended. This profiletype field represents the type of profiling applied to each session. For instance, in case of the basic profile session, the value of the profiletype field is set to '0 x 0,' and in case of the advanced profile session, the value of the profiletype field is set to '0 x 1.' The other values of '0 x 2 ~ 0 x FF' correspond to reserved values. This profiletype field is energized if the profiling field is set to '1,' and if the profiling field is set to zero, then profiletype field is not included in the ESG data. In other words, only if the service provider sets the profiling field to a value required to report that the profiling technique is applied to the profiling field, then the service provider can set up the value of the profiletype field as well. Once the terminal checks out the profile field, the terminal can determine if profiling is set. If the profile is set, the terminal checks out the value of the profiletype field, and then divides the ESG data session into the basic profile session and the advanced profile session to deal with the divided profile sessions.

With reference to FIG. 3, a process of creating these profile sessions will be described in detail as follows.

The basic profile session and the advanced profile session can be divided on the basis of the feature of an element or an attribute inside an xml schema defined by each fragment. For instance, if minOccurs equals '0,', signifying the feature of the element or the attribute, or if use corresponds to "optional," the ESG data session is divided into the advanced profile session. If minOccurs is equal to or more than '1,' or use corresponds to "required," the ESG data session is divided into the basic profile session.

At this time, because optional data can be essential data needed to receive a broadcasting service, i.e. an AV service, such data can be exceptionally included in the basic profile session. For example, even though data for gaining access to Service Discovery Protocol (SDP) information required to receive the broadcasting service can be optional, as the data is essentially needed to perform the broadcasting service, it has to be included in the basic profile session. Furthermore, since the basic profile session has such an object that minimum ESG data is first classified and then the classified minimum ESG data is separately forwarded, the basic profile session makes it a rule to be configured with one session. Further, the advanced profile session is configured with one session or with divided sessions which are more than two, as occasion demands.

The basic profile session illustrated in FIG. 3 shows a channel list including service-r, acquisition-r and SDP, which correspond to the minimum amount of information required to receive the AV service, wherein the contents included in the basic profile session may be different piece by piece, as the requirements of broadcasters demand. In more detail, only several fragments of all the fragments can be included in the basic profile session, and other than this, at least one of the fragments configured with a part of the contents can be included in the basic profile session.

Specifically, basic data can be a set of data of at least one fragment essentially needed to provide a DVB-H broadcasting service among all the fragments, and additional data consists of data of the remaining fragments excepted from the fragments constructing the basic data. Otherwise, basic data can consist of a set of essential data inside one or more fragments necessary to provide the DVB-H broadcasting service, and additional data consists of a set of the other additional data excepted from the essential data of the fragments constructing the basic data.

For example, because the essential data and the additional data can be included in one service fragment, one service fragment is divided into service-r corresponding to essential data of the service fragment, and service-o corresponding to additional data of the service fragment, from which the basic and the advanced profile sessions can be generated.

Likewise, the basic profile session includes data satisfying the requisites described above among each of fields of the fragments needed to receive the DVB-H broadcasting service.

The advanced profile session includes all advanced data apart from the basic data included in the basic profile session. As shown in FIG. 3, the advanced profile session consists of data of the remaining fragments, including acquisition-o corresponding to the other additional data excepted from the acquisition-r corresponding to essential data of the acquisition fragment, and including the service-o corresponding to the other additional data excepted from the service-r corresponding to essential data of the service fragment included in the basic profile session. This advanced profile session is divided into several sessions, and then the divided sessions can be transmitted. Thus, at the terminal side data during the basic profile session and data during the divided sessions must be put together to produce complete ESG data. Accordingly, the terminal first receives the basic profile session to acquire data during the basic profile session, and has to merge the data during the basic profile session and data during the advanced profile session after receiving the advanced profile session as a background job. Then, a process of merging is accomplished by detecting if the data during the advanced profile session is relevant data on the basis of a fragment ID. The received whole advanced profile session is divided into several advanced profile sessions according to the validity period and the feature of the data, and the divided advanced profile sessions can be forwarded.

As described above, if the ESG data is classified into the basic data required for the broadcasting service and the additional data, and if numbers of classified data are carried and transmitted during each session, the terminal first receives and analyzes the basic data required to offer the broadcasting service, and can deal with the remaining additional data as a background job. Therefore, as it is possible to display data on screen with only necessary minimum data without waiting for the completion of reception of all ESG data, waiting time is considerably reduced, and quality of services is remarkably improved. Also, since the terminal can optionally get access to the advanced profile session, data processing the terminal does not necessarily perform can be omitted. As a result, processing performance can become better. Moreover, as the capacity of data to be transmitted is decreased on the side of the service provider, the reduction of a transmission time interval causes a repetition period to be shortened. Consequently, the receiving effectiveness of the terminal can be noticeably elevated.

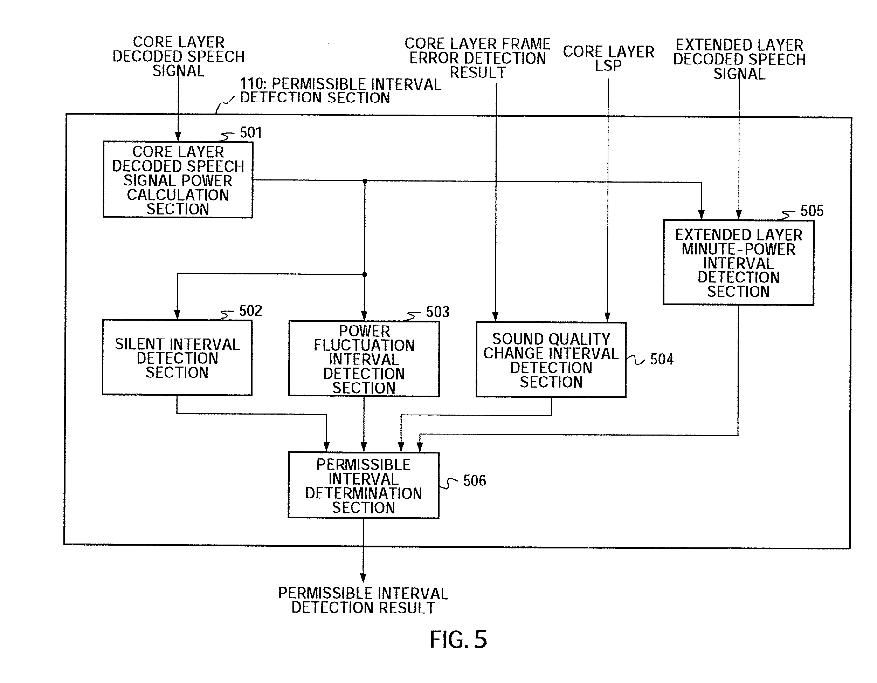

A control operation executed by the terminal receiving the ESG data according to an embodiment of the present invention will be described with reference to FIG. 5.

As shown in FIG. 5, if a broadcasting service is rendered to a viewer (i.e., a user), the terminal receives an ESG bootstrap session in step 500. Upon receiving the ESG bootstrap session, the terminal analyzes the ESG bootstrap session, and in step 505, determines if a present transmission mode is a multiple stream mode or a single stream mode. If the present transmission mode is not a multiple stream mode, in step 510, the terminal determines that the present transmission mode is the single stream mode, searches for a pertinent session, and receives all the ESG data. Otherwise, in case of the multiple stream mode, in step 515, the terminal decodes an announcement carousel. In particular, the beginning of ESG data transmission starts with receiving the ESG bootstrap session, which includes ESG provider descriptor and ESG access descriptor. The ESG access descriptor possesses information during an announcement carousel session. When the terminal searches for the announcement carousel session to receive an init container, it can detect information on a partition declaration in the init container. In the present invention, by using the information on the partition declaration, the terminal can ascertain if the ESG data is received in a state where a profiling is applied to the ESG data. The terminal analyzes the partition declaration on the basis of the syntax shown in FIG. 4.

As described above, if the terminal decodes the announcement carousel session, the terminal can acquire information on each session from the partition declaration. First, in step 520, the terminal checks if the profiling is set. That is, the terminal confirms if a value signifying the application of the profiling is set in a profiling field in the partition declaration.

If the profiling is not set, the terminal proceeds to step 525, and receives all ESG data as multiple streams in accordance with a conventional multiple stream mode. Namely, if the profiling is not set, in a usual scheme, the terminal seeks for pertinent sessions in each multiple stream, receives all ESG data, and completes the reception. To the contrary, if the profiling is set, the terminal proceeds to step 530, and ascertains if there is a session of a profiletype to be checked. Then, in a case when the profiling is set, since the DVB broadcasting service can start once basic data included in basic profile session is quickly acquired, the terminal first locates the basic profile session. In this way, so as to distinguish from other sessions the basic profile session, during which the basic data required to provide the DVB-H broadcasting service is carried, the terminal analyzes a part designated by reference numeral 410 in FIG. 4, and discriminates between the profiletypes of each session.

Based on the outcome resulting from analyzing the profiletype in the partition declaration, in step 535, the terminal determines if the outcome denotes the basic profile session. If the terminal determines that the outcome does not denote the basic profile session, (namely, if the profiletype is set to an advanced profile), the terminal proceeds to step 540, where the terminal deals with the advanced profile session as a background job. Otherwise, if the terminal determines that the outcome denotes the basic profile session (namely, if the profiletype is set to a basic profile), the terminal proceeds to step 545, and acquires the basic ESG data. In step 550, the terminal is ready to process the basic ESG data and to prepare a channel list. Thus, if the terminal determines that the profiletype is set to the basic profile, it seeks a relevant basic profile session, acquires all basic ESG data, and prepares for data of the channel list to display on a screen. Thereafter, the terminal returns back to step 530, checks profiletypes of the remaining sessions, and deals with the advanced profile session as a background job. Then, if there exist no more sessions, the terminal proceeds to step 555, displays the channel list, and ends the reception of the ESG data.

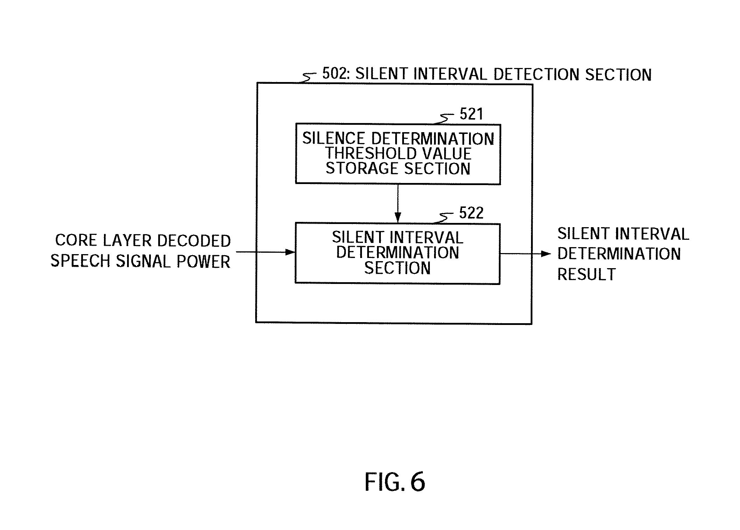

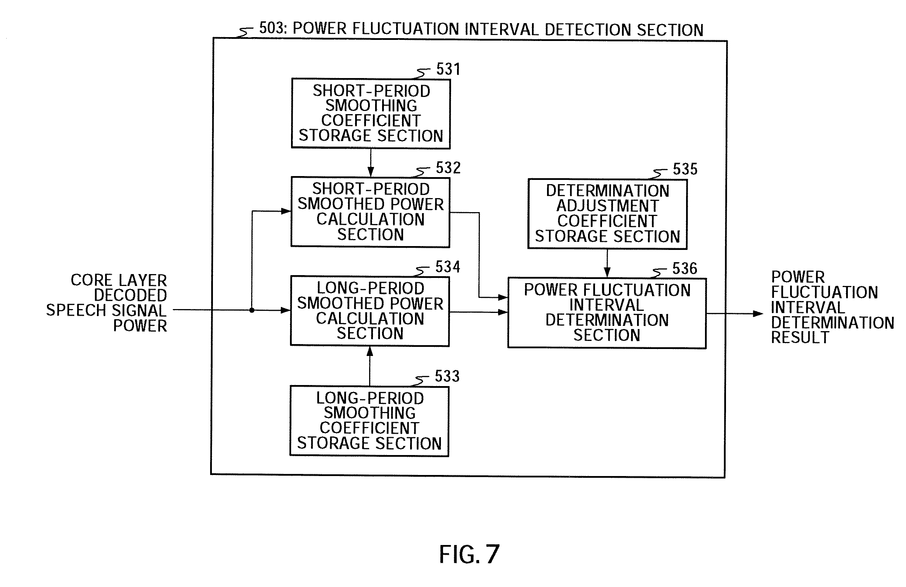

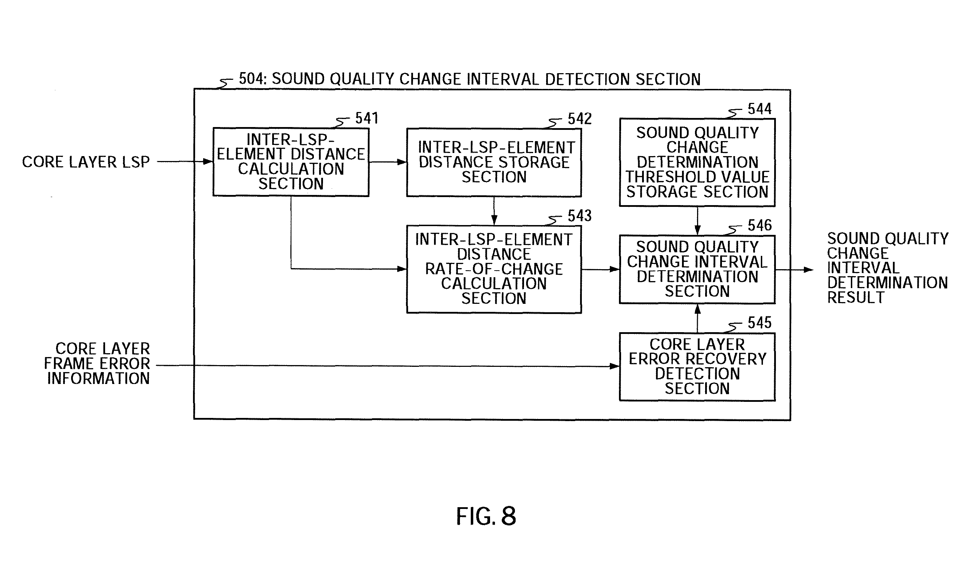

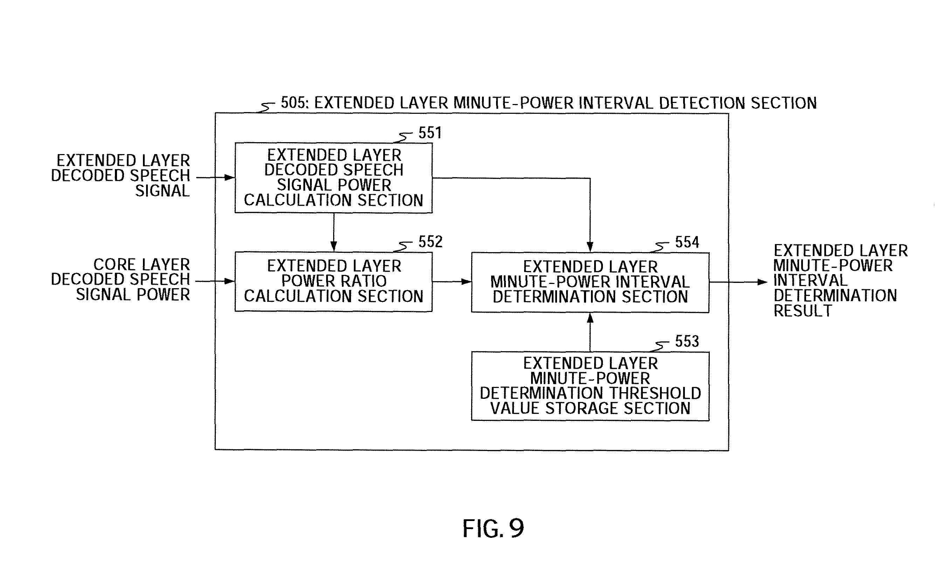

As described above, as only information essentially required to receive the broadcasting service can be transmitted if the profiling technique is applied to the ESG data, data processing the terminal does not necessarily perform can be omitted. As a result, processing performance becomes better. Moreover, as the capacity of data to be transmitted is decreased, in turn the reduction of the transmission time interval causes the repetition period to be shortened. Consequently, the receiving effectiveness at the receiving end can be noticeably elevated. In this respect, a numerical value of reduction of the transmission capacity has a meaning, and the reduction effect of the transmission capacity by each of the models of the ESG data can be shown in tabular form as in FIG. 6. Here, each numerical value signifies the reduction effect obtained when each data (e.g. an element or an attribute) is merely classified and divided into required/optional. Hence, when constructing an actual basic profile, because the fragments, including service bundle, purchase, contents, schedule, etc., are excluded from the actual basic profile, according to a method of constructing the basic profile, the reduction effect may grow even larger than the numerical values presented in FIG. 6.

As described above, by the application of the profiling technique through which the minimum ESG data required to receive the DVB-H service is separated from the whole ESG data and is then transmitted during a separated session, the waiting time for the reception of the ESG data, with which the users must be always accompanied, is considerably reduced, and the receiving performance is improved. Accordingly, improvement of service quality that users desire can be achieved. Furthermore, if the same method is applied to important ESG data even in case of renewing the important ESG data, the same improvement effect described above can be attained.

While the invention has been shown and described with reference to certain preferred embodiment thereof, it will be understood by those skilled in the art that various changes in form and details may be made therein without departing from the scope of the invention as further defined by the appended.

## Claims

1. A method for efficiently providing Electric Service Guide, ESG, data in a Digital Video Broadcasting-Handheld, DVB-H, system, the method comprising the steps of:
(1) transmitting ESG data to a terminal by a DVB-H service provider;
(2) determining, by the terminal, if there exists in the ESG data a setting of a profiling for separating minimum ESG data to process separated minimum ESG data,
(3) detecting if a profiletype set in the ESG data denotes a basic profile session including basic data necessary to provide a DVB-H broadcasting service when the profiling is set; and
(4) processing the retrieved basic profile session first I after retrieving the basic profile session on the basis of a result of the detecting.

2. The method as claimed in claim 1, wherein the profiling and the profiletype are detected from a partition declaration in an init container during an ESG announcement carousel session from an ESG bootstrap session, when the terminal receives the ESG bootstrap session to decode the received ESG bootstrap session, and where a result of the decoding signifies an ESG multiple stream mode.

3. The method as claimed in claim 1 or 2, wherein step (4) further comprises :
acquiring basic data needed to provide a DVB-H broadcasting service from the basic profile session; and
acquiring additional data from an advanced profile session by dealing with the advanced profile session as a background job if the profiletype corresponds to the advanced profile session.

4. The method as claimed in one of claims 1 to 3, further comprising:
classifying the ESG data into additional data and basic data required to
provide the DVB-H broadcasting service, so that the DVB-H service provider applies the profiling to the ESG data; and
generating the ESG data classified into the basic profile session including the basic data and at least one advanced profile session including the additional data.

5. The method as claimed in claim 3, wherein the basic data comprises data of at least one fragment essentially required to provide the DVB-H broadcasting service among all the fragments.

6. The method as claimed in claim 3, wherein the basic data comprises a set of essential data in at least one fragment required to provide the DVB-H broadcasting service.

7. The method as claimed in claim 5, wherein the additional data comprises data of the remaining fragments other than the fragments constructing the basic data.

8. The method as claimed in claim 6, wherein the additional data comprises a set of the remaining additional data other than the essential data of the fragments constructing the basic data.

9. The method as claimed in claim 3, which further comprises merging the basic data and the additional data, which the terminal acquires.

10. A system for efficiently providing Electric Service Guide, ESG, data in a Digital Video Broadcasting-Handheld, DVB-H, system, the system comprising:
a DVB-H service provider for transmitting ESG data to a terminal; and
a terminal for determining if there exists in the ESG data a setting of a profiling through which the terminal separates minimum ESG data to process the separated minimum ESG data, for detecting if a profiletype set in the ESG data denotes a basic profile session including basic data necessary to provide a DVB-H broadcasting service when the profiling is set, and for processing the retrieved basic profile session first after retrieving the basic profile session.

11. The system as claimed in claim 10, wherein the terminal is adapted for receiving an ESG bootstrap session to decode the received ESG bootstrap session, and when a result of the decoding indicates an ESG multiple stream mode, for detecting from the ESG bootstrap session the profiling and the profiletype of a partition declaration in an init container during an ESG announcement carousel session.

12. The system as claimed in claim 10, wherein the terminal is adapted for acquiring basic data needed to provide a DVB-H broadcasting service from the basic profile session, and for acquiring additional data from an advanced profile session by dealing with the advanced profile session as a background job if the profiletype corresponds to the advanced profile session.

13. The system as claimed in claim 10, wherein the DVB-H service provider is adapted for classifying the ESG data into additional data and basic data required to provide the DVB-H broadcasting service, so that the DVB-H service provider applies the profiling to the ESG data, for generating the ESG data classified into a basic profile session including the basic data and at least one advanced profile session including the additional data, and for transmitting the generated ESG data to the terminal.

14. The system as claimed in claim 12, wherein the basic data comprises data of at least one fragment essentially required to provide the DVB-H broadcasting service among all the fragments.

15. The system as claimed in claim 12, wherein the basic data comprises a set of essential data in at least one fragment required to provide the DVB-H broadcasting service.

16. The system as claimed in claim 14, wherein the additional data comprises data of the remaining fragments other than the fragments constructing the basic data.

17. The system as claimed in claim 15, wherein the additional data comprises a set of the remaining additional data other than the essential data of the fragments constructing the basic data.

18. The system as claimed in claim 12, wherein the terminal is further adapted for merging the acquired basic data and the acquired additional data.
